# EUROPEAN PATENT APPLICATION

(11) **EP 4 319 230 A1**
(43) Date of publication of application: **07.02.2024**
(21) Application number: 22819474.2
(22) Date of filing: 06.06.2022
(51) Int. Cl.: H04W 12/04

(54) **KEY MATERIAL PROCESSING METHOD, ACQUISITION METHOD, INFORMATION TRANSMISSION METHOD, AND DEVICE**

(30) Priority: 09.06.2021 CN 202110642764
(71) Applicant: Vivo Mobile Communication Co., Ltd., Dongguan, Guangdong 523863 (CN)
(72) Inventor: ZHANG, Yizhong, Dongguan, Guangdong 523863 (CN); XIE, Zhenhua, Dongguan, Guangdong 523863 (CN)
(74) Representative: Winter, Brandl - Partnerschaft mbB
(86) International application number: PCT/CN2022/097117
(87) International publication number: WO 2022/257876

(57) **Abstract**

This application discloses a processing method and an obtaining method for a key material, an information transmission method, and a device, and belongs to the field of communication technologies. The processing method for a key material in an embodiment of this application includes: receiving, by a second terminal, first information, where the first information is used to determine a first association relationship between a first terminal and the second terminal; and sending, by the second terminal, a key material of the first terminal based on the first association relationship, where the key material of the first terminal includes security information required for communication performed by the first terminal.

## Description

### CROSS-REFERENCE TO RELATED APPLICATIONS

This application claims priority to Chinese Patent Application No. 202110642764.0, filed on June 9, 2021 in China, which is incorporated herein by reference in its entirety.

### TECHNICAL FIELD

This application belongs to the field of communication technologies, and specifically relates to a processing method and an obtaining method for a key material, an information transmission method, and a device.

### BACKGROUND

With the popularity of the Internet of Things (IoT) and smart home systems, there may be a plurality of smart home systems in one home. A smart home system connects various devices (such as an audio and video device, a lighting system, a curtain controller, an air conditioning controller, and a security system) in a house together, to implement mutual communication and form a communication topology network that provides various functions and means such as home appliance control, lighting control, telephone remote control, indoor and outdoor remote control, anti-theft alarming, environmental monitoring, and heating and ventilation control.

All devices in a smart home need to access a 5G network during networking of the smart home, to take advantage of 5G network services. However, many smart IoT devices have only limited functions (or referred to as restricted functions). Therefore, how to provide a related security material for a smart IoT device whose function is restricted is an urgent problem to be resolved.

### SUMMARY

Embodiments of this application provides a processing method and an obtaining method for a key material, an information transmission method, and a device, to resolve a problem of how to provide a related security material for a smart IoT device whose function is restricted.

According to a first aspect, a processing method for a key material is provided, including:
receiving, by a second terminal, first information, where the first information is used to determine a first association relationship between a first terminal and the second terminal; and
sending, by the second terminal, a key material of the first terminal based on the first association relationship, where
the key material of the first terminal includes security information required for communication performed by the first terminal.

According to a second aspect, an obtaining method for a key material is provided, including:
receiving, by a first terminal, a key material of the first terminal that is determined by a second terminal, where the key material of the first terminal includes security information required for communication performed by the first terminal.

According to a third aspect, an information transmission method is provided, including:
sending, by a third-party function or a first network function, first information to a second terminal, where the first information is used to determine a first association relationship between a first terminal and the second terminal, so that the second terminal sends a key material of the first terminal in a case that the first information is received; and
the key material of the first terminal includes security information required for communication performed by the first terminal.

According to a fourth aspect, a processing apparatus for a key material is provided, including:
a first receiving module, configured to receive first information, where the first information is used to determine a first association relationship between a first terminal and a second terminal; and
a second sending module, configured to send a key material of the first terminal based on the first association relationship, where
the key material of the first terminal includes security information required for communication performed by the first terminal.

According to a fifth aspect, an obtaining apparatus for a key material is provided, including:
a second receiving module, configured to receive a key material of a first terminal that is determined by a second terminal, where the key material of the first terminal includes security information required for communication performed by the first terminal.

According to a sixth aspect, a terminal is provided. The terminal includes a processor, a memory, and a program or instructions stored in the memory and capable of running on the processor, where when the program or instructions are executed by the processor, the steps of the method according to the first aspect or the steps of the method according to the second aspect are implemented.

According to a seventh aspect, a terminal is provided, including a processor and a communication interface. The communication interface is configured to receive first information, where the first information is used to determine a first association relationship between a first terminal and a second terminal. The processor is configured to send a key material of the first terminal based on the first association relationship through the communication interface, where the key material of the first terminal includes security information required for communication performed by the first terminal. Alternatively, the communication interface is configured to receive the key material of the first terminal that is determined by the second terminal, where the key material of the first terminal includes security information required for communication performed by the first terminal.

According to an eighth aspect, an information transmission apparatus is provided, including:
a second sending module, configured to send first information to a second terminal, where the first information is used to determine a first association relationship between a first terminal and the second terminal, so that the second terminal sends a key material of the first terminal in a case that the first information is received; and
the key material of the first terminal includes security information required for communication performed by the first terminal.

According to a ninth aspect, a network side device is provided. The network side device includes a processor, a memory, and a program or instructions stored in the memory and capable of running on the processor, where when the program or instructions are executed by the processor, the steps of the method according to the third aspect are implemented.

According to a tenth aspect, a network side device is provided, including a processor and a communication interface. The communication interface is configured to send first information to a second terminal, where the first information is used to determine a first association relationship between a first terminal and the second terminal, so that the second terminal sends a key material of the first terminal in a case that the first information is received; and the key material of the first terminal includes security information required for communication performed by the first terminal.

According to an eleventh aspect, a readable storage medium is provided. The readable storage medium stores a program or instructions, where when the program or instructions are executed by a processor, the steps of the method according to the first aspect or the steps of the method according to the third aspect are implemented.

According to a twelfth aspect, a chip is provided. The chip includes a processor and a communication interface, where the communication interface is coupled with the processor, and the processor is configured to run a program or instructions, to implement the method according to the first aspect, or the method according to the second aspect, or the method according to the third aspect.

According to a thirteenth aspect, a computer program/program product is provided. The computer program/program product is stored in a non-volatile storage medium, and the computer program/program product is executed by at least one processor, to implement the steps of the method according to the first aspect, or the steps of the method according to the second aspect, or the steps of the method according to the third aspect.

In the embodiments of this application, the second terminal receives the first information that is used to determine the first association relationship between the first terminal and the second terminal, and sends the key material of the first terminal based on the first association relationship, so that the first terminal can obtain the key material that is determined by the second terminal for the first terminal. Therefore, even if a function of the first terminal is restricted, security can be ensured when the first terminal accesses a network. This resolves a problem of how to generate a related key material used by a smart home device during networking authorization/authentication.

### BRIEF DESCRIPTION OF DRAWINGS

FIG. 1 is a block diagram of a wireless communication system to which the embodiments of this application can be applied;
FIG. 2 is a flowchart of steps of a processing method for a key material according to an embodiment of this application;
FIG. 3 is a schematic diagram of steps of an obtaining method for a key material according to an embodiment of this application;
FIG. 4 is a schematic diagram of steps of an information transmission method according to an embodiment of this application;
FIG. 5 is a schematic diagram of an interaction in example 1 according to an embodiment of this application;
FIG. 6 is a schematic diagram of an interaction in example 2 according to an embodiment of this application;
FIG. 7 is a schematic diagram of an interaction in example 3 according to an embodiment of this application;
FIG. 8 is a schematic diagram of a structure of a processing apparatus for a key material according to an embodiment of this application;
FIG. 9 is a schematic diagram of a structure of an obtaining apparatus for a key material according to an embodiment of this application;
FIG. 10 is a schematic diagram of a structure of an information transmission apparatus according to an embodiment of this application;
FIG. 11 is a schematic diagram of a structure of a communication device according to an embodiment of this application;
FIG. 12 is a schematic diagram of a structure of a terminal according to an embodiment of this application; and
FIG. 13 is a schematic diagram of a structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and the claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the quantity of objects is not limited. For example, there may be one or more first objects. In addition, in this specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6th Generation, 6G) communication system.

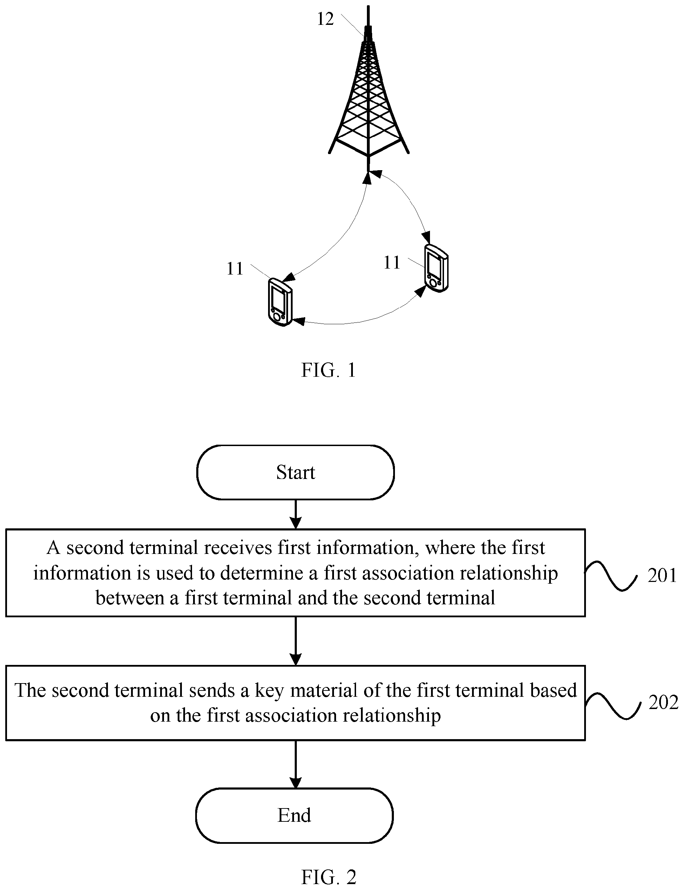

FIG. 1 is a block diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PUE). The wearable device includes a smart watch, a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, a processing method and an obtaining method for a key material, an information transmission method, and a device that are provided in the embodiments of this application are described below in detail by using some embodiments and application scenarios thereof.

As shown in FIG. 2, at least one embodiment of this application provides a processing method for a key material. The method is performed by a second terminal and includes the following steps:

Step 201: The second terminal receives first information, where the first information is used to determine a first association relationship between a first terminal and the second terminal.

Step 202: The second terminal sends a key material of the first terminal based on the first association relationship.

The key material of the first terminal includes security information required for communication performed by the first terminal.

In this embodiment of this application, the second terminal receives the first information, determines the first association relationship between the first terminal and the second terminal based on the first information, and generates and sends the key material of the first terminal. In other words, the first information may also be referred to as trigger information that is used to trigger the second terminal to generate and send the key material of the first terminal.

In at least one optional embodiment of this application, the first association relationship includes at least one of the following:
an association relationship between a device identifier of the first terminal and a device identifier of the second terminal;
an association relationship between the device identifier of the first terminal and a user identifier of the second terminal;
an association relationship between a user identifier of the first terminal and the user identifier of the second terminal; and
an association relationship between the user identifier of the first terminal and the device identifier of the second terminal.

In another optional embodiment of this application, the first information includes at least one of the following:
a first identifier, where the first identifier is a device identifier and/or a user identifier of the first terminal;
a second identifier, where the second identifier is a device identifier and/or a user identifier of the second terminal; and
association information, where the association information is information used for determining the first association relationship.

In an optional embodiment, the key material includes at least one of the following:
a security key;
a security parameter; and
subscription credential information, for example, the subscription credential information includes at least one of the following:
   a long-term key of a subscription credential;
   a user identifier;
   a LTE route selection policy (UE Route Selection Policy, URSP); and
   a key set identifier in 5G (Key Set Identifier in 5G, ngKSI).

In at least one embodiment of this application, the method further includes:
deriving, by the second terminal, the key material of the first terminal based on a key material of the second terminal, where
the key material of the second terminal includes security information required for communication performed by the second terminal. In other words, the key material of the first terminal is derived based on the key material of the second terminal.

In at least one embodiment of this application, step 201 includes any one of the following:
receiving, by the second terminal, the first information sent by the first terminal;
receiving, by the second terminal, the first information sent by a first network function, for example, the first network function is an access network function or a core network function, which is not specifically limited herein; and
receiving, by the second terminal, the first information sent by a third-party function, for example, the third-party function is an application server or another communication apparatus that has a wireless transceiver function, and the third-party function may be an independently disposed entity, or may be a module or unit that is disposed on another network entity, which is not specifically limited herein.

Accordingly, in at least one optional embodiment of this application, that the second terminal sends a key material of the first terminal in step 202 includes any one of the following:
sending, by the second terminal, the key material of the first terminal to the first terminal;
sending, by the second terminal, the key material of the first terminal to a third-party function, where the key material of the first terminal is sent to the first terminal through the third-party function, and for example, the third-party function is an application server; and
sending, by the second terminal, the key material of the first terminal to a first network function, where the key material of the first terminal is sent to the first terminal through the first network function, and for example, the first network function is an access network function or a core network function, which is not specifically limited herein.

It should be noted that, if the first terminal directly interacts with the second terminal, the method provided in this embodiment of this application further includes:
establishing, by the second terminal, direct communication with the first terminal. In this case, the second terminal sends the key material of the first terminal to the first terminal through the direct communication; and/or the second terminal receives, through the direct communication, the first information sent by the first terminal. Optionally, transmission of the first information may be included in the process of establishing the direct communication.

In an optional embodiment, in a case that the second terminal sends the key material of the first terminal to the first terminal, the method further includes:
sending, by the second terminal, the key material of the first terminal to the first network function or the third-party function.

In another optional embodiment, the method further includes at least one of the following:
starting, by the second terminal, a first timer, where a timing period of the first timer is valid time of the security information of the first terminal; and the security information of the first terminal is invalid after the valid time expires.

It should be noted that, an existing timer may be reused as the first timer. In this case, both the first terminal and the second terminal can obtain a related parameter (for example, a start occasion or the timing period) of the first timer.

Optionally, the key material further includes valid time, where the valid time is valid time of the security information, and the security information is invalid after the valid time expires.

In summary, in this embodiment of this application, the second terminal receives the first information that is used to determine the first association relationship between the first terminal and the second terminal, and sends the key material of the first terminal based on the first association relationship, so that the first terminal can obtain the key material that is determined by the second terminal for the first terminal. Therefore, even if a function of the first terminal is restricted, security can be ensured when the first terminal accesses a network. This resolves a problem of how to generate a related key material used by a smart home device during networking authorization/authentication.

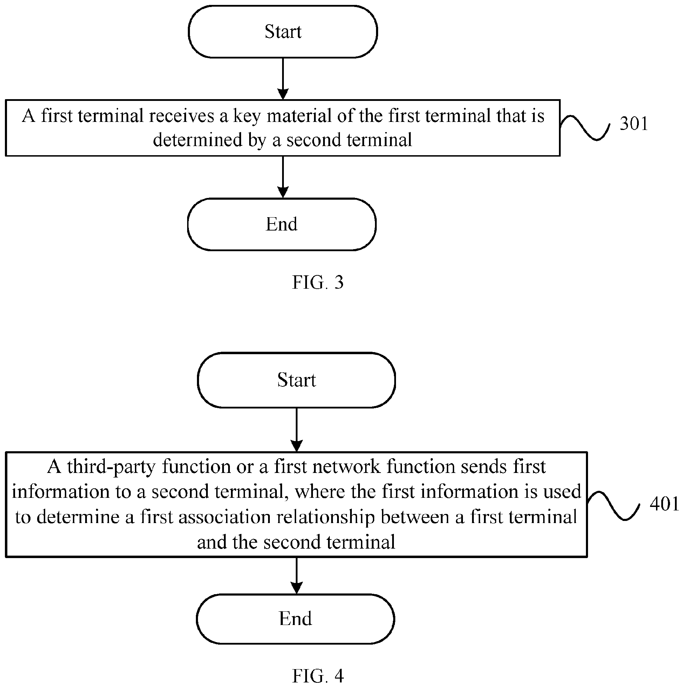

As shown in FIG. 3, an embodiment of this application provides an obtaining method for a key material, including the following steps:

Step 301: A first terminal receives a key material of the first terminal that is determined by a second terminal, where the key material of the first terminal includes security information required for communication performed by the first terminal.

In an optional embodiment, the key material of the first terminal is derived based on a key material of the second terminal, where
the key material of the second terminal includes security information required for communication performed by the second terminal.

In another optional embodiment, the security information includes at least one of the following:
a security key;
a security parameter; and
subscription credential information, for example, the subscription credential information includes at least one of the following: a long-term key of a subscription credential;
a user identifier;
a LTE route selection policy (URSP); and
a key set identifier in 5G (Key Set Identifier in 5G, ngKSI).

In at least one optional embodiment of this application, before step 301, the method further includes:
sending, by the first terminal, first information to the second terminal, where the first information is used to determine a first association relationship between the first terminal and the second terminal.

In this embodiment of this application, the first terminal sends the first information to the second terminal; and the second terminal determines the first association relationship between the first terminal and the second terminal based on the first information, and generates and sends the key material of the first terminal. In other words, the first information is used to implicitly instruct the second terminal to generate the key material of the first terminal.

In another optional embodiment of this application, the first association relationship includes at least one of the following:
an association relationship between a device identifier of the first terminal and a device identifier of the second terminal;
an association relationship between the device identifier of the first terminal and a user identifier of the second terminal;
an association relationship between a user identifier of the first terminal and the user identifier of the second terminal; and
an association relationship between the user identifier of the first terminal and the device identifier of the second terminal.

In still another optional embodiment of this application, the first information includes at least one of the following:
a first identifier, where the first identifier is a device identifier and/or a user identifier of the first terminal;
a second identifier, where the second identifier is a device identifier and/or a user identifier of the second terminal; and
association information, where the association information is information used for determining the first association relationship.

For example, the first terminal obtains the association information based on a quick response code or an application.

In at least one embodiment of this application, step 301 includes any one of the following:
receiving, by the first terminal, the key material of the first terminal that is sent by the second terminal;
receiving, by the first terminal, the key material of the first terminal that is sent by a third-party function, where the key material of the first terminal is sent to the third-party function by the second terminal, for example, the third-party function is an application server, and the third-party function may be an independently disposed entity, or may be a module or unit that is disposed on another network entity, which is not specifically limited herein; and
receiving, by the first terminal, the key material of the first terminal that is sent by a first network function, where the key material of the first terminal is sent to the first network function by the second terminal, for example, the first network function is an access network function or a core network function, which is not specifically limited herein.

It should be noted that, if the first terminal directly interacts with the second terminal, the method provided in this embodiment of this application further includes:
establishing, by the first terminal, direct communication with the second terminal. In this case, the first terminal receives the key material of the first terminal through the direct communication; and/or the first terminal sends the first information to the second terminal through the direct communication. Optionally, transmission of the first information may be included in the process of establishing the direct communication.

In an optional embodiment, before step 301, the method further includes:
sending, by the first terminal, an initial verification message to a third-party function, where the initial verification message is used by the third-party function to check and trust the first terminal.

The initial verification message includes at least one of the following:
an identifier of the first terminal, where the identifier may be used to uniquely determine the first terminal;
a default credential of the first terminal, where the default credential is a credential that can be used to uniquely identify and verify security before the first terminal performs onboarding (onboarding); and
a network identifier of a local network of the first terminal, where the network identifier of the local network is a non-public network identifier that is different from a network identifier of a public land mobile network (Public Land Mobile Network, PLMN).

In an optional embodiment, the key material further includes:
valid time, where the valid time is valid time of the security information, and the security information is invalid after the valid time expires.

In another optional embodiment, the method further includes:
sending, by the first terminal, first update indication information to the second terminal after the valid time expires, where the first update indication information is used to instruct the second terminal to update the key material of the first terminal.

In summary, in this embodiment of this application, the second terminal receives the first information that is used to determine the first association relationship between the first terminal and the second terminal, and sends the key material of the first terminal based on the first association relationship, so that the first terminal can obtain the key material that is determined by the second terminal for the first terminal. Therefore, even if a function of the first terminal is restricted, security can be ensured when the first terminal accesses a network. This resolves a problem of how to generate a related key material used by a smart home device during networking authorization/authentication.

As shown in FIG. 4, an embodiment of this application further provides an information transmission method, including the following steps:
Step 401: A third-party function or a first network function sends first information to a second terminal, where the first information is used to determine a first association relationship between a first terminal and the second terminal, so that the second terminal sends a key material of the first terminal in a case that the first information is received.

The key material of the first terminal includes security information required for communication performed by the first terminal.

In this embodiment of this application, the third-party function or the first network function sends the first information to the second terminal; and the second terminal determines the first association relationship between the first terminal and the second terminal based on the first information, and generates and sends the key material of the first terminal. In other words, the first information is used to implicitly instruct the second terminal to generate the key material of the first terminal.

It should be noted that, the third-party function is an application server, the third-party function may be an independently disposed entity, or may be a module or unit that is disposed on another network entity, and the first network function is an access network function or a core network function. This is not specifically limited herein.

In an optional embodiment, the first association relationship includes at least one of the following:
an association relationship between a device identifier of the first terminal and a device identifier of the second terminal;
an association relationship between the device identifier of the first terminal and a user identifier of the second terminal;
an association relationship between a user identifier of the first terminal and the user identifier of the second terminal; and
an association relationship between the user identifier of the first terminal and the device identifier of the second terminal.

In another optional embodiment, the first information includes at least one of the following:
a first identifier, where the first identifier is a device identifier and/or a user identifier of the first terminal;
a second identifier, where the second identifier is a device identifier and/or a user identifier of the second terminal; and
association information, where the association information is information used for determining the first association relationship.

In at least one optional embodiment of this application, the key material of the first terminal is derived based on a key material of the second terminal, where
the key material of the second terminal is security information required for communication performed by the second terminal.

The security information includes at least one of the following:
a security key;
a security parameter; and
subscription credential information, for example, the subscription credential information includes at least one of the following:
   a long-term key of a subscription credential;
   a user identifier;
   a LTE route selection policy (URSP); and
   a key set identifier in 5G (Key Set Identifier in 5G, ngKSI).

In at least one optional embodiment of this application, after the third-party function or the first network function sends the first information to the second terminal, the method further includes:
receiving, by the third-party function or the first network function, the key material of the first terminal that is determined by the second terminal and sent by the second terminal; and
sending, by the third-party function or the first network function, the key material of the first terminal to the first terminal.

In an optional embodiment, before the first network function sends the first information to the second terminal, the method further includes:
receiving, by the third-party function or the first network function, the first information sent by the first terminal. In other words, the first network function first receives the first information sent by the first terminal, and forwards the first information to the second terminal; and the second terminal determines the key material of the first terminal.

In another optional embodiment, before the third-party function sends the first information to the second terminal, the method further includes:
receiving, by the third-party function, an initial verification message sent by the first terminal, where the initial verification message is used by the third-party function to check and trust the first terminal.

The initial verification message includes at least one of the following:
an identifier of the first terminal, where the identifier may be used to uniquely determine the first terminal;
a default credential of the first terminal, where the default credential is a credential that can be used to uniquely identify and verify security before the first terminal performs onboarding (onboarding); and
a network identifier of a local network of the first terminal, where the network identifier of the local network is a non-public network identifier that is different from a network identifier of a PLMN.

In summary, this embodiment of this application provides a manner in which a terminal determines a key material with the assistance of a first network function or a third-party function, to resolve a problem of how to generate a related key material used by a smart home device during networking authorization/authentication.

To describe the method provided in the embodiments of this application more clearly, the following provides several examples for illustration.

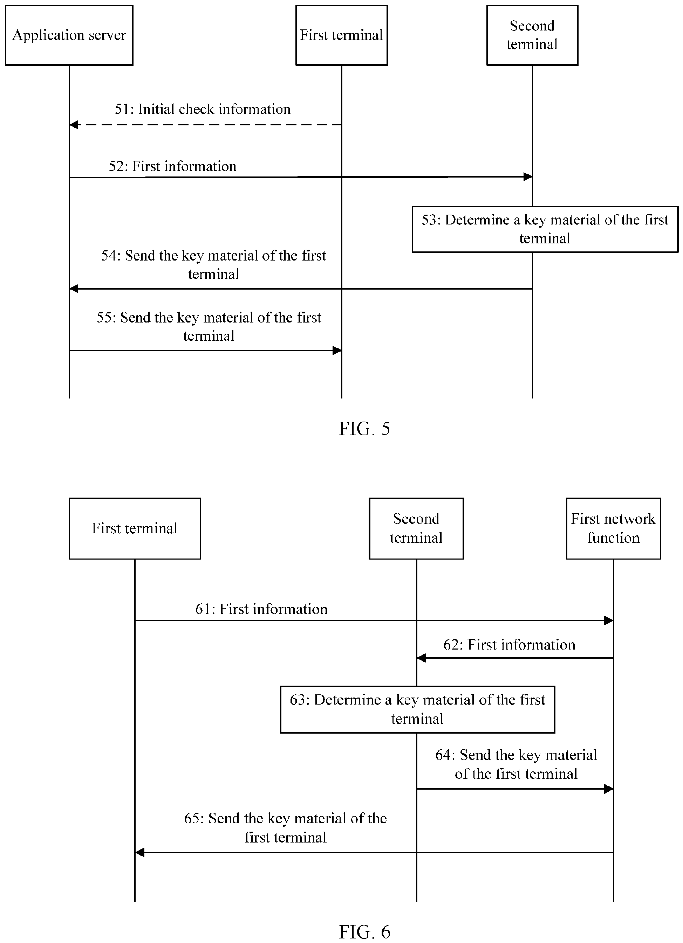

Example 1: An application server triggers first information and indicates a first association relationship, as shown in FIG. 5.

Step 51 (Optional): A first terminal sends initial check information to the application server, where the application server implements checking and trusting of the first terminal.

Step 52: The application server sends the first information to a second terminal, where the first information includes a first identifier, a second identifier, and/or an association relationship.

Step 53: The second terminal determines a first association relationship based on the first information, and determines a key material of the first terminal.

Step 54: The second terminal sends the key material of the first terminal to the application server.

Step 55: The application server sends the key material of the first terminal to the first terminal.

Example 2: A first terminal triggers first information and indicates a first association relationship, as shown in FIG. 6.

Step 61: The first terminal sends the first information to a first network function, where the first information includes a first identifier, a second identifier, and/or an association relationship.

Step 62: The first network function sends the first information to a second terminal.

Step 63: The second terminal determines a first association relationship based on the first information, and determines a key material of the first terminal.

Step 64: The second terminal sends the key material of the first terminal to the first network function.

Step 65: The first network function sends the key material of the first terminal to the first terminal.

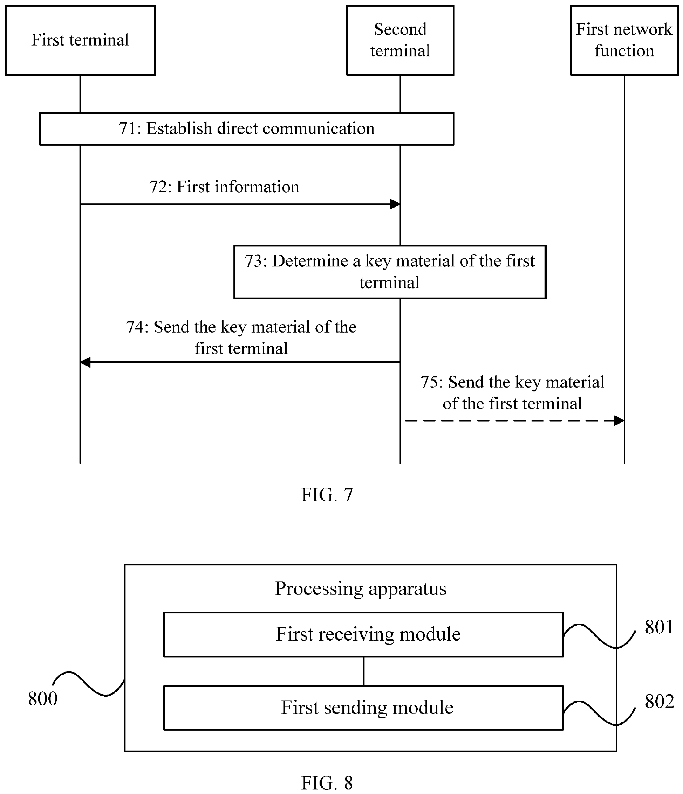

Example 3: A first terminal establishes direct communication with a second terminal, and the first terminal triggers first information and indicates a first association relationship, as shown in FIG. 7.

Step 71: The first terminal establishes the direct communication with the second terminal.

Step 72: The first terminal sends the first information to the second terminal through the direct communication, where the first information at least includes association information.

Step 73: The second terminal determines a first association relationship based on the first information, and determines a key material of the first terminal.

Step 74: The second terminal sends the key material of the first terminal to the first terminal through the direct communication.

Step 75 (Optional): The second terminal sends the key material of the first terminal to a first network function.

It should be noted that, the method provided in the embodiments of this application may be performed by an apparatus or a control module that is in the apparatus and that is configured to perform the method. In this embodiment of this application, the method being performed by an apparatus is used as an example to describe the apparatus provided in the embodiments of this application.

As shown in FIG. 8, an embodiment of this application further provides a processing apparatus 800 for a key material, including:
a first receiving module 801, configured to receive first information, where the first information is used to determine a first association relationship between a first terminal and a second terminal; and
a second sending module 802, configured to send a key material of the first terminal based on the first association relationship, where
the key material of the first terminal includes security information required for communication performed by the first terminal.

In an optional embodiment, the first association relationship includes at least one of the following:
an association relationship between a device identifier of the first terminal and a device identifier of the second terminal;
an association relationship between the device identifier of the first terminal and a user identifier of the second terminal;
an association relationship between a user identifier of the first terminal and the user identifier of the second terminal; and
an association relationship between the user identifier of the first terminal and the device identifier of the second terminal.

In an optional embodiment, the first information includes at least one of the following:
a first identifier, where the first identifier is a device identifier and/or a user identifier of the first terminal;
a second identifier, where the second identifier is a device identifier and/or a user identifier of the second terminal; and
association information, where the association information is information used for determining the first association relationship.

In an optional embodiment, the security information includes at least one of the following:
a security key;
a security parameter; and
subscription credential information.

In an optional embodiment, the apparatus further includes:
a deriving module, configured to derive the key material of the first terminal based on a key material of the second terminal, where
the key material of the second terminal includes security information required for communication performed by the second terminal.

In an optional embodiment, the first receiving module includes any one of the following:
a first receiving sub-module, configured to receive the first information sent by the first terminal;
a second receiving sub-module, configured to receive the first information sent by a first network function; and
a third receiving sub-module, configured to receive the first information sent by a third-party function.

In an optional embodiment, the first sending module includes any one of the following:
a first sending sub-module, configured to send the key material of the first terminal to the first terminal;
a second sending sub-module, configured to send the key material of the first terminal to a third-party function, where the key material of the first terminal is sent to the first terminal through the third-party function; and
a third sending sub-module, configured to send the key material of the first terminal to a first network function, where the key material of the first terminal is sent to the first terminal through the first network function.

In an optional embodiment, the apparatus further includes:
a third sending module, configured to send the key material of the first terminal to the first network function or the third-party function.

In an optional embodiment, the apparatus further includes:
a first timing module, configured to start a first timer, where a timing period of the first timer is valid time of the security information of the first terminal; and the security information of the first terminal is invalid after the valid time expires.

In an optional embodiment, the key material further includes:
valid time, where the valid time is valid time of the security information.

In this embodiment of this application, the second terminal receives the first information that is used to determine the first association relationship between the first terminal and the second terminal, and sends the key material of the first terminal based on the first association relationship, so that the first terminal can obtain the key material that is determined by the second terminal for the first terminal. Therefore, even if a function of the first terminal is restricted, security can be ensured when the first terminal accesses a network. This resolves a problem of how to generate a related key material used by a smart home device during networking authorization/authentication.

It should be noted that the processing apparatus for a key material provided in this embodiment of this application is an apparatus that can perform the foregoing processing method for a key material. Therefore, all embodiments of the foregoing processing method for a key material are applicable to this apparatus, with the same or similar beneficial effects achieved.

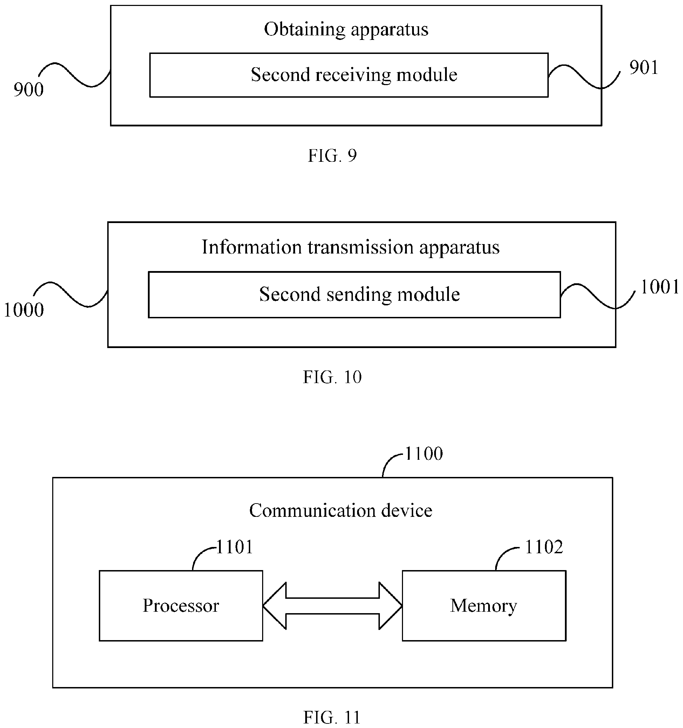

As shown in FIG. 9, an embodiment of this application further provides an obtaining apparatus 900 for a key material, including:
a second receiving module 901, configured to receive a key material of a first terminal that is determined by a second terminal, where the key material of the first terminal includes security information required for communication performed by the first terminal.

In an optional embodiment, the key material of the first terminal is derived based on a key material of the second terminal, where
the key material of the second terminal includes security information required for communication performed by the second terminal.

In an optional embodiment, the security information includes at least one of the following:
a security key;
a security parameter; and
subscription credential information.

In an optional embodiment, the apparatus further includes:
a fourth sending module, configured to send first information to the second terminal, where the first information is used to determine a first association relationship between the first terminal and the second terminal.

In an optional embodiment, the first association relationship includes at least one of the following:
an association relationship between a device identifier of the first terminal and a device identifier of the second terminal;
an association relationship between the device identifier of the first terminal and a user identifier of the second terminal;
an association relationship between a user identifier of the first terminal and the user identifier of the second terminal; and
an association relationship between the user identifier of the first terminal and the device identifier of the second terminal.

In an optional embodiment, the first information includes at least one of the following:
a first identifier, where the first identifier is a device identifier and/or a user identifier of the first terminal;
a second identifier, where the second identifier is a device identifier and/or a user identifier of the second terminal; and
association information, where the association information is information used for determining the first association relationship.

In an optional embodiment, the second receiving module includes any one of the following:
a fourth receiving sub-module, configured to receive the key material of the first terminal that is sent by the second terminal;
a fifth receiving sub-module, configured to receive the key material of the first terminal that is sent by a third-party function, where the key material of the first terminal is sent to the third-party function by the second terminal; and
a sixth receiving sub-module, configured to receive the key material of the first terminal that is sent by a first network function, where the key material of the first terminal is sent to the first network function by the second terminal.

In an optional embodiment, the apparatus further includes:
a verification module, configured to send an initial verification message to a third-party function, where the initial verification message is used by the third-party function to check and trust the first terminal.

In an optional embodiment, the initial verification message includes at least one of the following:
an identifier of the first terminal;
a default credential of the first terminal; and
a network identifier of a local network of the first terminal.

In an optional embodiment, the key material further includes:
valid time, where the valid time is valid time of the security information.

In an optional embodiment, the apparatus further includes:
a first updating module, configured to send first update indication information to the second terminal after the valid time expires, where the first update indication information is used to instruct the second terminal to update the key material of the first terminal.

In this embodiment of this application, the second terminal receives the first information that is used to determine the first association relationship between the first terminal and the second terminal, and sends the key material of the first terminal based on the first association relationship, so that the first terminal can obtain the key material that is determined by the second terminal for the first terminal. Therefore, even if a function of the first terminal is restricted, security can be ensured when the first terminal accesses a network. This resolves a problem of how to generate a related key material used by a smart home device during networking authorization/authentication.

It should be noted that the obtaining apparatus for a key material provided in this embodiment of this application is an apparatus that can perform the foregoing obtaining method for a key material. Therefore, all embodiments of the foregoing obtaining method for a key material are applicable to this apparatus, with the same or similar beneficial effects achieved.

As shown in FIG. 10, an embodiment of this application further provides an information transmission apparatus 1000, including:
a second sending module 1001, configured to send first information to a second terminal, where the first information is used to determine a first association relationship between a first terminal and the second terminal, so that the second terminal sends a key material of the first terminal in a case that the first information is received; and
the key material of the first terminal includes security information required for communication performed by the first terminal.

In an optional embodiment, the first association relationship includes at least one of the following:
an association relationship between a device identifier of the first terminal and a device identifier of the second terminal;
an association relationship between the device identifier of the first terminal and a user identifier of the second terminal;
an association relationship between a user identifier of the first terminal and the user identifier of the second terminal; and
an association relationship between the user identifier of the first terminal and the device identifier of the second terminal.

In an optional embodiment, the first information includes at least one of the following:
a first identifier, where the first identifier is a device identifier and/or a user identifier of the first terminal;
a second identifier, where the second identifier is a device identifier and/or a user identifier of the second terminal; and
association information, where the association information is information used for determining the first association relationship.

In an optional embodiment, the key material of the first terminal is derived based on a key material of the second terminal, where
the key material of the second terminal includes security information required for communication performed by the second terminal.

In an optional embodiment, the security information includes at least one of the following:
a security key;
a security parameter; and
subscription credential information.

In an optional embodiment, the apparatus further includes:
a third receiving module, configured to receive the key material of the first terminal that is determined by the second terminal and sent by the second terminal; and
a fifth sending module, configured to send the key material of the first terminal to the first terminal.

In an optional embodiment, the apparatus further includes:
a fourth receiving module, configured to receive the first information sent by the first terminal.

In an optional embodiment, the apparatus further includes:
a verification receiving module, configured to receive an initial verification message sent by the first terminal, where the initial verification message is used by the third-party function to check and trust the first terminal.

In an optional embodiment, the initial verification message includes at least one of the following:
an identifier of the first terminal;
a default credential of the first terminal; and
a network identifier of a local network of the first terminal.

In this embodiment of this application, the second terminal receives the first information that is used to determine the first association relationship between the first terminal and the second terminal, and sends the key material of the first terminal based on the first association relationship, so that the first terminal can obtain the key material that is determined by the second terminal for the first terminal. Therefore, even if a function of the first terminal is restricted, security can be ensured when the first terminal accesses a network. This resolves a problem of how to generate a related key material used by a smart home device during networking authorization/authentication.

It should be noted that the obtaining apparatus for a key material provided in this embodiment of this application is an apparatus that can perform the foregoing obtaining method for a key material. Therefore, all embodiments of the foregoing obtaining method for a key material are applicable to this apparatus, with the same or similar beneficial effects achieved.

The processing apparatus, the obtaining apparatus, and the information transmission apparatus in the embodiments of this application may be an apparatus, an apparatus or an electronic device with an operating system, or may be a component, an integrated circuit, or a chip in a terminal. The apparatus or electronic device may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The processing apparatus, the obtaining apparatus, and the information transmission apparatus provided in the embodiments of this application can implement the processes implemented in the method embodiments in FIG. 1 to FIG. 7, with the same technical effects achieved. To avoid repetition, details are not described herein again.

Optionally, as shown in FIG. 11, an embodiment of this application further provides a communication device 1100, including a processor 1101, a memory 1102, and a program or instructions stored in the memory 1102 and capable of running on the processor 1101. For example, in a case that the communication device 1100 is a second terminal, when the program or instructions are executed by the processor 1101, the processes of the foregoing embodiment of the processing method for a key material are implemented, with the same technical effects achieved. In a case that the communication device is a first terminal, when the program or instructions are executed by the processor 1101, the processes of the foregoing embodiment of the obtaining method for a key material are implemented, with the same technical effects achieved. In a case that the communication device 1100 is a network side device (for example, a first network function or a third-party function), when the program or instructions are executed by the processor 1101, the processes of the foregoing embodiment of the information transmission method are implemented, with the same technical effects achieved. To avoid repetition, details are not described herein again.

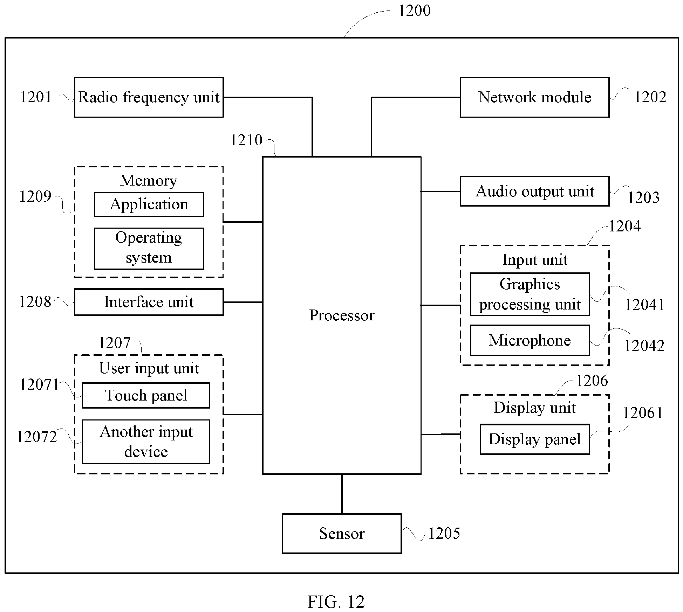

An embodiment of this application further provides a terminal, including a processor and a communication interface. The communication interface is configured to receive first information, where the first information is used to determine a first association relationship between a first terminal and a second terminal; and the processor is configured to send a key material of the first terminal based on the first association relationship through the communication interface, where the key material of the first terminal includes security information required for communication performed by the first terminal. Alternatively, the communication interface is configured to receive a key material of a first terminal that is determined by a second terminal, where the key material of the first terminal includes security information required for communication performed by the first terminal. This terminal embodiment corresponds to the foregoing method embodiment on the terminal side. Each implementation process and implementation of the foregoing method embodiment may be applicable to this terminal embodiment, with the same technical effects achieved. Specifically, FIG. 12 is a schematic diagram of a hardware structure of a terminal according to an embodiment of this application.

The terminal 1200 includes but is not limited to at least a part of components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that the terminal 1200 may further include a power supply (such as a battery) that supplies power to each component. The power supply may be logically connected to the processor 1210 through a power supply management system. Therefore, functions such as management of charging, discharging, and power consumption are implemented by using the power supply management system. The structure of the terminal shown in FIG. 12 does not constitute a limitation on the terminal. The terminal may include more or fewer components than those shown in the figure, or some components may be combined, or there may be a different component arrangement. Details are not described herein.

It should be understood that, in this embodiment of this application, the input unit 1204 may include a graphics processing unit (Graphics Processing Unit, GPU) 12041 and a microphone 12042; and the graphics processing unit 12041 processes image data of a still picture or video obtained by an image capture apparatus (such as a camera) in a video capture mode or an image capture mode. The display unit 1206 may include a display panel 12061. Optionally, the display panel 12061 may be configured in a form such as a liquid crystal display or an organic light-emitting diode. The user input unit 1207 includes a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a functional button (such as a volume control button or a power on/off button), a trackball, a mouse, and a joystick. Details are not described herein.

In this embodiment of this application, the radio frequency unit 1201 receives downlink data from a network side device and then sends the downlink data to the processor 1210 for processing; and sends uplink data to the network side device. Usually, the radio frequency unit 1201 includes but is not limited to an antenna, at least one amplifier, a transceiver, a coupler, a low noise amplifier, a duplexer, and the like.

The memory 1209 may be configured to store software programs or instructions and various data. The memory 1209 may mainly include a program or instruction storage area and a data storage area. The program or instruction storage area may store an operating system, an application or instruction required by at least one function (for example, a sound playing function or an image playing function), and the like. In addition, the memory 1209 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1210 may include one or more processing units. Optionally, an application processor and a modem processor may be integrated into the processor 1210. The application processor mainly processes an operating system, a user interface, an application, an instruction, or the like. The modem processor mainly processes wireless communication, for example, a baseband processor. It may be understood that, alternatively, the modem processor may not be integrated into the processor 1210.

The radio frequency unit 1201 of a second terminal is configured to: receive first information, where the first information is used to determine a first association relationship between a first terminal and the second terminal; and send a key material of the first terminal based on the first association relationship, where the key material of the first terminal includes security information required for communication performed by the first terminal.

Alternatively, the radio frequency unit 1201 of a first terminal is configured to receive a key material of the first terminal that is determined by a second terminal, where the key material of the first terminal includes security information required for communication performed by the first terminal.

In this embodiment of this application, the second terminal receives the first information that is used to determine the first association relationship between the first terminal and the second terminal, and sends the key material of the first terminal based on the first association relationship, so that the first terminal can obtain the key material that is determined by the second terminal for the first terminal. Therefore, even if a function of the first terminal is restricted, security can be ensured when the first terminal accesses a network. This resolves a problem of how to generate a related key material used by a smart home device during networking authorization/authentication.

It should be noted that the terminal provided in this embodiment of this application is a terminal that can perform the foregoing processing method or obtaining method for a key material. Therefore, all embodiments of the foregoing processing method or obtaining method for a key material are applicable to the terminal, with the same or similar beneficial effects achieved.

An embodiment of this application further provides a network side device, including a processor and a communication interface. The communication interface is configured to send first information to a second terminal, where the first information is used to determine a first association relationship between a first terminal and the second terminal, so that the second terminal sends a key material of the first terminal in a case that the first information is received; and the key material of the first terminal includes security information required for communication performed by the first terminal. This embodiment of the network side device corresponds to the foregoing method embodiment on the network side device. Each implementation process and implementation of the foregoing method embodiment may be applicable to this network side device embodiment, with the same technical effects achieved.

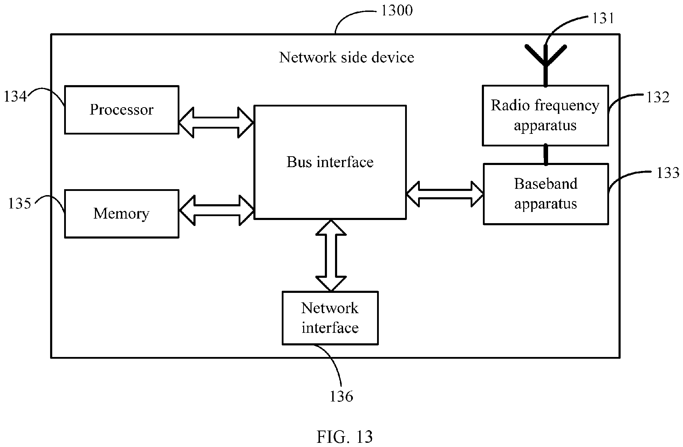

Specifically, an embodiment of this application further provides a network side device. As shown in FIG. 13, the network side device 1300 includes an antenna 131, a radio frequency apparatus 132, and a baseband apparatus 133. The antenna 131 is connected to the radio frequency apparatus 132. In an uplink direction, the radio frequency apparatus 132 receives information through the antenna 131, and sends the received information to the baseband apparatus 133 for processing. In a downlink direction, the baseband apparatus 133 processes to-be-sent information, and sends the information to the radio frequency apparatus 132. The radio frequency apparatus 132 processes the received information and then sends the information through the antenna 131.

The radio frequency apparatus 132 may be located in the baseband apparatus 133. The method performed by the network side device in the foregoing embodiment may be implemented in the baseband apparatus 133. The baseband apparatus 133 includes a processor 134 and a memory 135.

The baseband apparatus 133 may include, for example, at least one baseband board, where a plurality of chips are disposed on the baseband board. As shown in FIG. 13, one chip is, for example, the processor 134, connected to the memory 135, to invoke the program in the memory 135 to perform the operation of the network side device shown in the foregoing method embodiment.

The baseband apparatus 133 may further include a network interface 136, configured to exchange information with the radio frequency apparatus 132. For example, the interface is a common public radio interface (Common Public Radio Interface, CPRIfor short).

Specifically, the network side device in this embodiment of the present invention further includes instructions or a program stored in the memory 135 and capable of running on the processor 134. The processor 134 invokes the instructions or program in the memory 135 to perform the method performed by the modules shown in FIG. 10, with the same technical effects achieved. To avoid repetition, details are not described herein again.

An embodiment of this application further provides a readable storage medium. The readable storage medium stores a program or instructions. When the program or the instructions are executed by a processor, the processes of the foregoing embodiment of the processing method for a key material, the foregoing embodiment of the obtaining method for a key material, or the foregoing embodiment of the information transmission method are implemented, with the same technical effects achieved. To avoid repetition, details are not described herein again.

The processor is a processor in the terminal in the foregoing embodiment. The readable storage medium includes a computer-readable storage medium such as a read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled with the processor. The processor is configured to run a program or instructions, to implement the processes of the foregoing embodiment of the processing method for a key material, the foregoing embodiment of the obtaining method for a key material, or the foregoing embodiment of the information transmission method, with the same technical effects achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product is stored in a non-volatile storage medium. The program product is executed by at least one processor, to implement the steps of the methods described above.

It should be noted that, in this specification, the term "include", "comprise", or any other variant thereof is intended to cover a non-exclusive inclusion, so that a process, a method, an article, or an apparatus that includes a list of elements includes not only those elements but also other elements which are not expressly listed, or further includes elements inherent to such process, method, article, or apparatus. In the absence of more restrictions, an element defined by "including a ..." does not exclude another same element in a process, a method, an article, or an apparatus that includes the element. In addition, it should be noted that a scope of the method and the apparatus in the embodiments of this application is not limited to: performing a function in a sequence shown or discussed, and may further include: performing a function in a basically simultaneous manner or in a reverse sequence based on an involved function. For example, the described method may be performed in a different order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are merely illustrative instead of restrictive. Under the enlightenment of this application, a person of ordinary skill in the art may make many forms without departing from the essence of this application and the protection scope of the claims, all of which fall within the protection of this application.

## Claims

1. A processing method for a key material, comprising:
receiving, by a second terminal, first information, wherein the first information is used to determine a first association relationship between a first terminal and the second terminal; and
sending, by the second terminal, a key material of the first terminal based on the first association relationship, wherein
the key material of the first terminal comprises security information required for communication performed by the first terminal.

2. The method according to claim 1, wherein the first association relationship comprises at least one of the following:
an association relationship between a device identifier of the first terminal and a device identifier of the second terminal;
an association relationship between the device identifier of the first terminal and a user identifier of the second terminal;
an association relationship between a user identifier of the first terminal and the user identifier of the second terminal; and
an association relationship between the user identifier of the first terminal and the device identifier of the second terminal.

3. The method according to claim 1, wherein the first information comprises at least one of the following:
a first identifier, wherein the first identifier is a device identifier and/or a user identifier of the first terminal;
a second identifier, wherein the second identifier is a device identifier and/or a user identifier of the second terminal; and
association information, wherein the association information is information used for determining the first association relationship.

4. The method according to claim 1, wherein the security information comprises at least one of the following:
a security key;
a security parameter; and
subscription credential information.

5. The method according to claim 1, wherein the method further comprises:
deriving, by the second terminal, the key material of the first terminal based on a key material of the second terminal, wherein
the key material of the second terminal comprises security information required for communication performed by the second terminal.

6. The method according to claim 1, wherein the receiving, by a second terminal, first information comprises any one of the following:
receiving, by the second terminal, the first information sent by the first terminal;
receiving, by the second terminal, the first information sent by a first network function; and
receiving, by the second terminal, the first information sent by a third-party function.

7. The method according to claim 1, wherein the sending, by the second terminal, a key material of the first terminal comprises any one of the following:
sending, by the second terminal, the key material of the first terminal to the first terminal;
sending, by the second terminal, the key material of the first terminal to a third-party function, wherein the key material of the first terminal is sent to the first terminal through the third-party function; and
sending, by the second terminal, the key material of the first terminal to a first network function, wherein the key material of the first terminal is sent to the first terminal through the first network function.

8. The method according to claim 7, wherein in a case that the second terminal sends the key material of the first terminal to the first terminal, the method further comprises:
sending, by the second terminal, the key material of the first terminal to the first network function or the third-party function.

9. The method according to claim 1, wherein the method further comprises:
starting, by the second terminal, a first timer, wherein a timing period of the first timer is valid time of the security information of the first terminal; and the security information of the first terminal is invalid after the valid time expires.

10. The method according to claim 4, wherein the key material further comprises:
valid time, wherein the valid time is valid time of the security information.

11. An obtaining method for a key material, comprising:
receiving, by a first terminal, a key material of the first terminal that is determined by a second terminal, wherein the key material of the first terminal comprises security information required for communication performed by the first terminal.

12. The method according to claim 11, wherein the key material of the first terminal is derived based on a key material of the second terminal; and
the key material of the second terminal comprises security information required for communication performed by the second terminal.

13. The method according to claim 11 or 12, wherein the security information comprises at least one of the following:
a security key;
a security parameter; and
subscription credential information.

14. The method according to claim 11, wherein before the receiving, by a first terminal, a key material of the first terminal that is determined by a second terminal, the method further comprises:
sending, by the first terminal, first information to the second terminal, wherein the first information is used to determine a first association relationship between the first terminal and the second terminal.

15. The method according to claim 14, wherein the first association relationship comprises at least one of the following:
an association relationship between a device identifier of the first terminal and a device identifier of the second terminal;
an association relationship between the device identifier of the first terminal and a user identifier of the second terminal;
an association relationship between a user identifier of the first terminal and the user identifier of the second terminal; and
an association relationship between the user identifier of the first terminal and the device identifier of the second terminal.

16. The method according to claim 14, wherein the first information comprises at least one of the following:
a first identifier, wherein the first identifier is a device identifier and/or a user identifier of the first terminal;
a second identifier, wherein the second identifier is a device identifier and/or a user identifier of the second terminal; and
association information, wherein the association information is information used for determining the first association relationship.

17. The method according to claim 11, wherein the receiving, by a first terminal, a key material of the first terminal that is determined by a second terminal comprises any one of the following:
receiving, by the first terminal, the key material of the first terminal that is sent by the second terminal;
receiving, by the first terminal, the key material of the first terminal that is sent by a third-party function, wherein the key material of the first terminal is sent to the third-party function by the second terminal; and
receiving, by the first terminal, the key material of the first terminal that is sent by a first network function, wherein the key material of the first terminal is sent to the first network function by the second terminal.

18. The method according to claim 11, wherein before the receiving, by a first terminal, a key material of the first terminal that is determined by a second terminal, the method further comprises:
sending, by the first terminal, an initial verification message to a third-party function, wherein the initial verification message is used by the third-party function to check and trust the first terminal.

19. The method according to claim 18, wherein the initial verification message comprises at least one of the following:
an identifier of the first terminal;
a default credential of the first terminal; and
a network identifier of a local network of the first terminal.

20. The method according to claim 13, wherein the key material further comprises:
valid time, wherein the valid time is valid time of the security information.

21. The method according to claim 20, wherein the method further comprises:
sending, by the first terminal, first update indication information to the second terminal after the valid time expires, wherein the first update indication information is used to instruct the second terminal to update the key material of the first terminal.

22. An information transmission method, comprising:
sending, by a third-party function or a first network function, first information to a second terminal, wherein the first information is used to determine a first association relationship between a first terminal and the second terminal, so that the second terminal sends a key material of the first terminal in a case that the first information is received; and
the key material of the first terminal comprises security information required for communication performed by the first terminal.

23. The method according to claim 22, wherein the first association relationship comprises at least one of the following:
an association relationship between a device identifier of the first terminal and a device identifier of the second terminal;
an association relationship between the device identifier of the first terminal and a user identifier of the second terminal;
an association relationship between a user identifier of the first terminal and the user identifier of the second terminal; and
an association relationship between the user identifier of the first terminal and the device identifier of the second terminal.

24. The method according to claim 22, wherein the first information comprises at least one of the following:
a first identifier, wherein the first identifier is a device identifier and/or a user identifier of the first terminal;
a second identifier, wherein the second identifier is a device identifier and/or a user identifier of the second terminal; and
association information, wherein the association information is information used for determining the first association relationship.

25. The method according to claim 22, wherein the key material of the first terminal is derived based on a key material of the second terminal; and
the key material of the second terminal comprises security information required for communication performed by the second terminal.

26. The method according to claim 22 or 25, wherein the security information comprises at least one of the following:
a security key;
a security parameter; and
subscription credential information.

27. The method according to claim 22, wherein after the sending, by a third-party function or a first network function, first information to a second terminal, the method further comprises:
receiving, by the third-party function or the first network function, the key material of the first terminal that is determined by the second terminal and sent by the second terminal; and
sending, by the third-party function or the first network function, the key material of the first terminal to the first terminal.

28. The method according to claim 22, wherein before the sending, by a third-party function or a first network function, first information to a second terminal, the method further comprises:
receiving, by the third-party function or the first network function, the first information sent by the first terminal.

29. The method according to claim 22, wherein before the sending, by a third-party function, first information to a second terminal, the method further comprises:
receiving, by the third-party function, an initial verification message sent by the first terminal, wherein the initial verification message is used by the third-party function to check and trust the first terminal.

30. The method according to claim 29, wherein the initial verification message comprises at least one of the following:
an identifier of the first terminal;
a default credential of the first terminal; and
a network identifier of a local network of the first terminal.

31. A processing apparatus for a key material, comprising:
a first receiving module, configured to receive first information, wherein the first information is used to determine a first association relationship between a first terminal and a second terminal; and
a second sending module, configured to send a key material of the first terminal based on the first association relationship, wherein
the key material of the first terminal comprises security information required for communication performed by the first terminal.

32. An obtaining apparatus for a key material, comprising:
a second receiving module, configured to receive a key material of a first terminal that is determined by a second terminal, wherein the key material of the first terminal comprises security information required for communication performed by the first terminal.

33. A terminal, comprising a processor, a memory, and a program or instructions stored in the memory and capable of running on the processor, wherein when the program or instructions are executed by the processor, the steps of the processing method for a key material according to any one of claims 1 to 10 or the steps of the obtaining method for a key material according to any one of claims 11 to 21 are implemented.

34. An information transmission apparatus, comprising:
a second sending module, configured to send first information to a second terminal, wherein the first information is used to determine a first association relationship between a first terminal and the second terminal, so that the second terminal sends a key material of the first terminal in a case that the first information is received; and
the key material of the first terminal comprises security information required for communication performed by the first terminal.

35. A network side device, wherein the network side device is a third-party function or a first network function, and comprises a processor, a memory, and a program or instructions stored in the memory and capable of running on the processor, and when the program or instructions are executed by the processor, the steps of the information transmission method according to any one of claims 22 to 30 are implemented.

36. A readable storage medium, wherein the readable storage medium stores a program or instructions, and when the program or instructions are executed by a processor, the steps of the processing method for a key material according to any one of claims 1 to 10, or the steps of the obtaining method for a key material according to any one of claims 11 to 21, or the steps of the information transmission method according to any one of claims 22 to 30 are performed.

37. A chip, comprising a processor and a communication interface, wherein the communication interface is coupled with the processor, and the processor is configured to run a program or instructions, to implement the steps of the processing method for a key material according to any one of claims 1 to 10, or the steps of the obtaining method for a key material according to any one of claims 11 to 21, or the steps of the information transmission method according to any one of claims 22 to 30.

38. A computer program product, wherein the computer program product is stored in a non-volatile storage medium, and the computer program product is executed by at least one processor, to implement the steps of the processing method for a key material according to any one of claims 1 to 10, or the steps of the obtaining method for a key material according to any one of claims 11 to 21, or the steps of the information transmission method according to any one of claims 22 to 30.
